# DEMANDE DE BREVET EUROPEEN

(11) **EP 0 909 913 A1**
(43) Date de publication de la demande: **21.04.1999**
(21) Numéro de dépôt: 98490025.8
(22) Date de dépôt: 07.10.1998
(51) Int. Cl.: F16K 31/08

(54) **Robinet de sécurité pour le gaz**

(30) Priorité: 17.10.1997 FR 9713257
(71) Demandeur: C.D. Industrie, SARL, 80520 Woincourt (FR)
(72) Inventeur: Notkias, Jean Louis, 76370 Martin Eglise (FR)
(74) Mandataire: Ecrepont, Robert

(57) **Abrégé**

Robinet (1) de sécurité pour le gaz comprenant un dispositif (9) de sécurité sensible à la variation de débit pour, au delà d'une valeur prédéterminée de débit, interrompre automatiquement la distribution du gaz, ce système de sécurité comprenant:
- l'obturateur (10), maintenu en position ouverte par des premiers moyens (13A,13B,13C,13D) exerçant des forces magnétiques dits moyens de maintien et
- le dispositif de réarmement, constitué par des seconds moyens (14) exerçant des forces magnétiques dits moyens de réarmement qui, lors d'une commande extérieure, ramènent l'obturateur en "position ouverte".

## Description

L'invention se rapporte à un robinet de sécurité pour le gaz.

Les anciennes installations domestiques de distribution de gaz présentent des risques d'accidents liés à l'arrachement possible du tuyau de raccordement existant entre le robinet de l'installation fixe de distribution et l'appareil consommateur.

Cet arrachement du tuyau provoque une importante libération de gaz.

Pour éviter cela, il est connu d'équiper les robinets d'un dispositif de sécurité (FR-A-2.714137, FR-A-2.696.524, FR-A-2.721990) sensible à la variation de débit pour, au delà d'une valeur prédéterminée du débit, interrompre automatiquement la distribution du gaz en obturant le passage par lequel transite le gaz.

Ces systèmes de sécurité comprennent un obturateur qui, coopérant avec un siège, est mobile entre une position dite "position ouverte" où l'obturateur est écarté de son siège et une "position de sécurité" dans laquelle cet obturateur est plaqué sur ledit siège.

Ces systèmes sont pourvus d'un moyen de réarmement permettant de ramener l'obturateur en position ouverte après que celui-ci se soit déclenché et que la conduite aval ait été rétablie.

Ces moyens de réarmement sont généralement réalisés par un moyen de rappel élastique de l'obturateur en position ouverte accompagné, par exemple, d'un rééquilibrage des pressions de part et d'autre de l'obturateur par l'intermédiaire d'une fuite contrôlée.

Certes, cette fuite est peu importante, mais elle existe et dans un local mal ventilé, le risque d'accident ne peut être totalement écarté.

Egalement, le gaz qui transite est à faible pression et, de ce fait, le tarage de ces robinets doit être précis.

Ce tarage dépend notamment de la force exercée par le moyen de rappel élastique.

Ces moyens de rappel élastique tels des ressorts métalliques et la flexibilité d'une membrane évoluent au cours du temps et, par conséquent, modifient également le tarage.

L'invention vise notamment à améliorer la fiabilité de ces robinets à système de sécurité.

A cet effet, l'invention a pour objet un robinet du type précité logeant un système de sécurité sensible à la variation de débit pour, au delà d'une valeur prédéterminée de débit, interrompre automatiquement la distribution du gaz, ce système de sécurité comprenant :
- un obturateur qui, coopérant avec un siège, est mobile entre une position dite position ouverte où l'obturateur est écarté de son siège et une position de sécurité dans laquelle cet obturateur est plaqué sur ledit siège et
- un moyen de réarmement permettant de ramener l'obturateur en position ouverte après que celui-ci se soit déclenché,
ce robinet étant notamment caractérisé en ce que :
- d'une part, l'obturateur est maintenu en position ouverte par des premiers moyens exerçant des forces magnétiques dits moyens de maintien et
- d'autre part, le dispositif de réarmement est constitué par des seconds moyens exerçant des forces magnétiques dits moyens de réarmement qui, lors d'une commande extérieure, ramènent l'obturateur en "position ouverte".

L'invention sera bien comprise à l'aide de la description ci-après faite, à titre d'exemple non limitatif, en regard du dessin qui représente schématiquement :
- figure 1 : une coupe axiale d'un robinet,
- figures 2 et 3 : un détail de robinet vu respectivement de dessus et de profil.

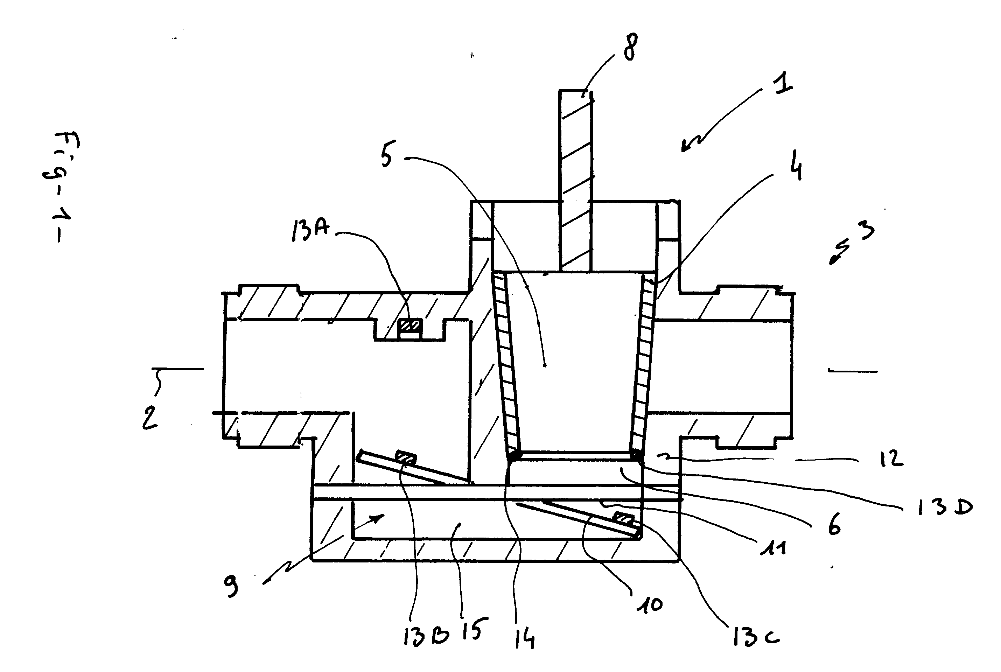

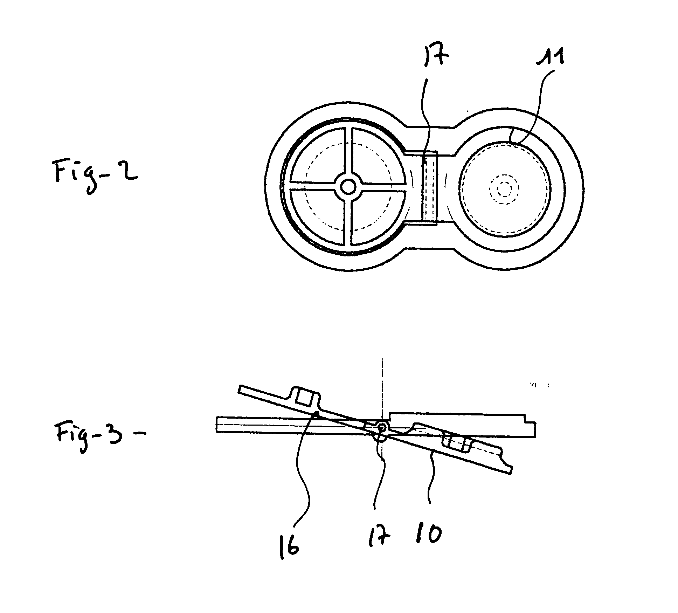

En se reportant au dessin, on voit un robinet 1 pour l'alimentation en gaz d'un appareil (non représenté).

Ce robinet pour le gaz est, en amont, relié à une conduite 2 d'alimentation et, en aval, pourvu d'un nez 3 tel un raccord ou un mamelon qui reçoit l'extrémité d'une conduite généralement flexible établissant la connexion entre le robinet et l'appareil consommateur.

Ce robinet loge un tournant 4 quart de tour pour établir au moment voulu l'alimentation en gaz et donc permettre l'ouverture et la fermeture du robinet.

Classiquement, le tournant 4 présente un canal 5 de communication qui relie la base 6 du tournant à un orifice de sortie situé dans sa paroi latérale.

Un organe 8 de préhension permet de le manoeuvrer en rotation.

Ce robinet loge également un dispositif 9 de sécurité sensible à la variation de débit pour, au delà d'une valeur prédéterminée de débit, interrompre automatiquement la distribution du gaz, ce système de sécurité comprenant :
- un obturateur 10 qui, coopérant avec un siège 11, est mobile entre une position dite position ouverte où l'obturateur 10 est écarté de son siège et une position de sécurité dans laquelle cet obturateur est plaqué sur ledit siège et
- un moyen 12 de réarmement permettant de ramener l'obturateur en position ouverte après que celui-ci se soit déclenché.

Selon une caractéristique de l'invention :
- d'une part, l'obturateur 10 est maintenu en position ouverte par des premiers moyens 13A,13B,13C,13D exerçant des forces magnétiques dits moyens de maintien et
- d'autre part, le dispositif de réarmement est constitué par des seconds moyens 14 exerçant des forces magnétiques dits moyens de réarmement qui, lors d'une commande extérieure, ramènent l'obturateur en "position ouverte".

Les moyens de maintien et de réarmement sont de préférence des aimants.

Selon une caractéristique de l'invention, c'est le tournant 4 qui porte les moyens 14 de réarmement, lesquels sont localisés sur le tournant en une zone telle que, lors de la manoeuvre du tournant, cette zone se déplace pour provoquer une modification du champ magnétique s'exerçant sur l'obturateur et ainsi le contraindre vers sa position ouverte et le réarmer.

C'est en fermant le robinet que le dispositif de sécurité se réarme.

Dans une forme de réalisation, le dispositif de sécurité est disposé dans un logement 15 situé sous le tournant et l'obturateur est une lame 16 maintenue en équilibre sur un axe 17.

Cette lame porte une partie des aimants de maintien coopérant avec l'autre partie de ces aimants de maintien qui sont, quant à eux, fixés au moins indirectement sur le corps du robinet.

La lame est en matériau de synthèse non ferromagnétique et les aimants de maintien sont fixés sur cette lame, par exemple, par collage.

Ces aimants agissent soit par attraction, soit par répulsion.

Avantageusement, la base du tournant porte, d'une part, une partie des moyens de maintien et, d'autre part, les moyens de réarmement.

L'aimant de maintien porté par le tournant a une polarité inversée de celle de l'aimant de réarmement et c'est notamment cette inversioin de polarité qui provoque le réarmement.

Pour notamment minimiser les pertes de charge, la lame pourrait présenter des découpes entre lesquelles découpes est situé l'un des aimants de maintien.

La zone située entre ces deux découpes constitue, par exemple, la zone active de l'obturateur, c'est à dire celle qui obture le passage du gaz.

Un tel robinet présente beaucoup d'avantages, car il n'est pas besoin de prévoir une fuite contrôlée, le réarmement du robinet se fait par simple manoeuvre du tournant et sans nécessité d'agir sur un organe supplémentaire actionnable de l'extérieur du robinet.

Egalement, la force développée par les aimants ne varie pas au cours du temps, contrairement à des moyens élastiques de rappel qui, en vieillissant, se modifient. Le tarage est donc constant.

Pour la fabrication, au moins une partie de la paroi délimitant le logement dans lequel est inséré le dispositif de sécurité est une pièce distincte du reste du corps du robinet.

Cette pièce est ensuite fixée de manière indémontable sur le corps du robinet ou tout au moins si elle est démontée, elle ne peut plus être remontée.

## Revendications

1. Robinet (1) de sécurité pour le gaz comprenant un dispositif (9) de sécurité sensible à la variation de débit pour, au delà d'une valeur prédéterminée de débit, interrompre automatiquement la distribution du gaz, ce système de sécurité comprenant :
- un obturateur (10) qui, coopérant avec un siège (11), est mobile entre une position dite position ouverte où l'obturateur (10) est écarté de son siège et une position de sécurité dans laquelle cet obturateur est plaqué sur ledit siège et
- un moyen (12) de réarmement permettant de ramener l'obturateur en position ouverte après que celui-ci se soit déclenché,
ce robinet étant **caractérisé** en ce que :
- d'une part, l'obturateur (10) est maintenu en position ouverte par des premiers moyens (13A, 13B, 13C, 13D) exerçant des forces magnétiques dits moyens de maintien et
- d'autre part, le dispositif de réarmement est constitué par des seconds moyens (14) exerçant des forces magnétiques dits moyens de réarmement qui, lors d'une commande extérieure, ramènent l'obturateur en "position ouverte".

2. Robinet de sécurité selon la revendication 1 **caractérisé** en ce que les moyens de maintien et de réarmement sont des aimants.

3. Robinet de sécurité selon la revendication 1 ou 2 **caractérisé** en ce que le tournant porte les moyens de réarmement, lesquels sont localisés sur le tournant en une zone telle que, lors de la manoeuvre du tournant, cette zone se déplace pour provoquer une modification du champ magnétique s'exerçant sur l'obturateur et ainsi le contraindre vers sa position ouverte et le réarmer.

4. Robinet de sécurité selon la revendication 1 **caractérisé** en ce que le dispositif de sécurité est disposé dans un logement situé sous le tournant et l'obturateur est une lame maintenue en équilibre sur un axe.

5. Robinet de sécurité selon la revendication 4 caractérisé en ce que la lame porte une partie des aimants de maintien coopérant avec l'autre partie de ces aimants de maintien qui sont, quant à eux, fixés au moins indirectement sur le corps du robinet.

6. Robinet de sécurité selon la revendication 4 ou 5 **caractérisé** en ce que la lame est en matériau de synthèse non ferromagnétique et les aimants de maintien sont fixés sur cette lame.

7. Robinet de sécurité selon la revendication 3 **caractérisé** en ce que la base du tournant porte, d'une part, une partie des moyens de maintien et, d'autre part, les moyens de réarmement.

8. Robinet de sécurité selon la revendication 4 ou 5 **caractérisé** en ce que la lame présente des découpes entre lesquelles découpes est situé l'un des aimants de maintien.
